# EUROPÄISCHE PATENTSCHRIFT

(11) **EP 3 050 137 B1**
(45) Veröffentlichungstag und Bekanntmachung des Hinweises auf die Patenterteilung: **05.06.2019**
(21) Anmeldenummer: 14758975.8
(22) Anmeldetag: 05.09.2014
(51) Int. Cl.: H01M 2/02, H01M 2/36, H01M 10/0525, H01M 10/42, H01M 10/0587

(54) **MITTEL IN EINER ZELLE ZUR ERHÖHUNG DER LEBENSDAUER UND SICHERHEIT**
MEDIUM IN A CELL FOR INCREASING SERVICE LIFE AND SAFETY
MOYEN DANS UNE PILE PERMETTANT D'AUGMENTER LA DURÉE DE VIE ET LA SÉCURITÉ DE LADITE PILE

(30) Priorität: 25.09.2013 DE 102013219320
(43) Veröffentlichungstag der Anmeldung: 03.08.2016
(73) Patentinhaber: Robert Bosch GmbH, 70442 Stuttgart (DE)
(72) Erfinder: THIELEN, Joerg, 70195 Stuttgart (DE); SCHUMANN, Bernd, 71277 Rutesheim (DE)
(86) Internationale Anmeldenummer: PCT/EP2014/068918
(87) Internationale Veröffentlichungsnummer: WO 2015/043922

(56) Entgegenhaltungen:
- WO-A1-2008/023951
- WO-A1-2012/114162
- WO-A1-2013/067371

## Beschreibung

### Stand der Technik

Die vorliegende Erfindung betrifft das technische Gebiet der Lithium-Ionen-Batterien.

Additive, die an dem negativen Pol einer Lithium-Ionen-Batterie reagieren, sind Additive, die nach dem Stand der Technik in einigen Ausführungen als elektrophile Additive (EAdd) bezeichnet werden. Additive, die an dem positiven Pol einer Lithium-Ionen-Batterie reagieren, sind Additive, die nach dem Stand der Technik in einigen Ausführungen als nukleophile Additive (NAdd) bezeichnet werden. Additive dieser Art sind chemisch reaktiv und verbrauchen sich durch Reaktionen an den Elektroden. Insbesondere die organischen, beispielsweise Alkyl-carbonatbasierten/carbonatenthaltenden Elektrolyte sind im Potentialbereich der Li-Ionenakkumulatoren besonders bei dem negativen Potential der Li-Anode oder Li-Graphit-Anode der Zelle elektrochemisch nicht stabil.

Des Weiteren kann die Verwendung und Anwendung alkylierenden Stoffen insbesondere von 1,3-Propansulton in Lithium-Ionen-Batterien aufgrund seiner hochtoxischen und mutagenen Eigenschaften gesundheitliche Gefährdungen beim Handhaben einer Zelle mit Leckagen von Elektrolyt bewirken. Somit ist zumindest bei zukünftigen Anwendung mit Restriktionen durch REACH zu rechnen. In heutigen kommerziellen Anwendungen finden sich bevorzugt gesättigte oder ungesättigte Sultone, insbesondere 1,3-Propansulton oder 1,3-Propensulton.

Unabhängig vom hohen Gefährdungspotential wird insbesondere über Sultonderivate in zahlreichen Patenten und Veröffentlichungen dokumentiert, dass die Verwendung von Verbindungen dieser Klasse als elektrophile Additive in Lithium-Ionen-Akkumulatoren von Vorteil hinsichtlich der Zyklenlebensdauer der Zelle ist (siehe beispielsweise US-Patent US 2009/0226808, EP 2124286 A1 und EP 2237359 A2, US 2011/0159378 A1). In den Akkumulatoren reagieren die Additive während der Formierung in den meisten Fällen nur teilweise ab. Die Konzentration des oder der kritischen Additive im Elektrolyten klingt dann über potentiell hunderte Zyklen hinweg von bis zu wenigen Prozent im Neuzustand auf einen Bruchteil der ursprünglichen Konzentration ab. Kommt es in dieser Phase zu einem Schaden in oder an der Zelle und damit verbunden zu einem Elektrolytaustritt, kann die im austretenden Elektrolyten enthaltene Restkonzentration der Additive eine mutagene und/oder karzinogene Wirkung etwa beim Einatmen eines eventuell entstandenen Aerosols oder durch direkten Hautkontakt entfalten.

Weiterhin ist aus der WO 2008/023951 A1 eine Lithium-Ionen-Batteriezelle bekannt, die als Elektrolyt Ethylencarbonat, Diethylcarbonat bzw. Propansulton enthält.

Weiterhin ist aus der WO 2012/114162 A1 eine weitere Lithium-Ionen-Batteriezelle in Form einer Wickelzelle bekannt, die ein Elektrolytadditiv, sowie metallisches Lithium als Scavenger enthält.

Darüber hinaus ist aus der WO 2013/067371 A1 eine Batteriezelle bekannt, in deren Anode ein Lithium-Vorrat vorgesehen ist.

### Offenbarung der Erfindung

Durch die vorliegende Erfindung wird daher folgendes bereit gestellt:
Eine Lithium-Ionen-Batteriezelle, umfassend
- mindestens einen Wickel enthaltend mindestens einen Elektrolyten, umfassend mindestens ein elektrophiles Additiv und/oder mindestens ein nucleophiles Additiv,
- ein Mittel (8), welches mit dem mindestens einen Additiv chemisch reagieren kann; wobei
- das mindestens eine Mittel in einer Hülle eingebettet ist, die durch eine Reaktion mit den Elektrolyten zersetzt werden kann und das mindestens eine Mittel thermochemisch oder thermophysikalisch freisetzen kann.

Dieses Mittel ist in einer besonders bevorzugten Ausführungsform elektrochemisch durch seine chemischen Bestandteile auf einem Potential von etwa 0 bis + 0,5 V gegenüber dem Potential einer Lithium/Lithium⁺ -Metall-Elektrode eingestellt. Alternativ wird es auf einem Träger, der den elektrischen Strom leitet, über einen elektrischen Widerstand oder direkt mit der Anode der Batterie verbunden und hat auf diese Weise ein dementsprechendes Potential.

Die Lithium-Ionen-Batterie der vorliegenden Erfindung schließt alle Arten typischer Lithiumionenbatterien ein, wie insbesondere alle gängigen Anoden-(wie beispielsweise Graphit oder MCMB) und Kathodenmaterialien (wie beispielsweise Lithiummetalloxide) und deren Kombinationen, insbesondere Materialien für Hochvoltanwendungen.

Die Elektrolytlösemittel für den Elektrolyten im Sinne der vorliegenden Erfindung umfassen die gängigen Lösemittel und damit viele chemische Stoffgruppen. So sind nicht-wässrige Lösungsmittel für die Elektrolytsalze hierbei nicht auf einen bestimmten Typ eines organischen Lösungsmittels limitiert. Neben zyklischen Carbonaten wie Ethylencarbonat (EC), Propylencarbonat (PC), Butylencarbonat (BC), Vinylencarbonat (VC), Fluorethylencarbonat (FEC), oder höher flourierten Homologen, und nicht-zyklischen, linearen Carbonaten wie Dimethylcarbonat (DMC), Diethylcarbonat (DEC), Ethylmethylcarbonat (EMC), Methylpropylcarbonat (MPC), Isopropylmethylcarbonat (IPMC), Butylmethylcarbonat (BMC), Tertbutylmethylcarbonat (TBMC), Ethylpropylcarbonat (EPC), sind auch Carboxylsäureester wie Methylformat, Methylacetat, Methylpropionat, Methylpivalat, Ethylpropionat, oder auch Ether wie Tetrahydrofuran, 2-Methyl-Tetrahydrofuran, 1,4-Dioxan, 1,3-Dioxolan, 1,2-Dimethoxyethan, 1,2-Diethoxyethan, fluorierte Ether sowie fluorierte Ester Im Sinne der vorliegenden Erfindung einsetzbar. Außerdem seien in diesem Zusammenhang Lactone wie γ-Butyrolacton (GBL), Nitrile (Acetonitril, Propionitril), Ketone, Lactame wie u.a. N-Methylpyrrolidon oder schwefelhaltige organische Lösungsmittel wie Dimethylsulfoxid, Sulfolan, Methylsulfolan oder Diethylsulfon genannt. Diese Lösungsmittel und deren Derivate können entweder für sich alleine oder in Kombination verwendet werden.

Die erfindungsgemäß zu verwendenden Elektrolyte bzw. Elektrolytlösungen können neben einer Kombination der oben genannten organischen Lösungsmittel weiterhin ein Elektrolytsalz umfassen, beispielsweise in einer Konzentration zwischen 0.5 mol/L und 2.0 mol/L, vorzugsweise ein Lithiumsalz, wie zum Beispiel LiPF₆, LiSbF₆, LiClO₄, LiBF₄, LiCF₃SO₃, LiAsF₆, LiN(CF₃SO₂)₂, LiCF₃(CF₂)₃SO₃ und/oder LiC₄BO₈.

Des Weiteren umfasst der Elektrolyt der erfindungsgemäßen Lithium-Ionen-Batterie Additive, die nicht auf eine bestimmte Funktion limitiert sind und in ihrer Anzahl und ihrem Gewichtsanteil am Elektrolyten beliebig kombiniert werden können. Um mit dem nachfolgend beschriebenen Mittel zu reagieren, ist vorzugsweise das mindestens eines der Additive nukleophil oder elektrophil.

Einige der Additive, die bekannt dafür sind, eine stabile Schutzschicht zu bilden, sind hochreaktive Stoffe. Im Falle der elektrophilen Additive sind insbesondere ringöffnende und/oder alkylierend wirkende Additive aus der Gruppe der Oxirane und der Lactone, wie β-Propiolacton und dessen funktionalisierte Derivate zu nennen. Höhere Lacton-Homologe, wie γ-Butyrolacton dagegen sind im Vergleich zu β-Propiolacton relativ stabil.

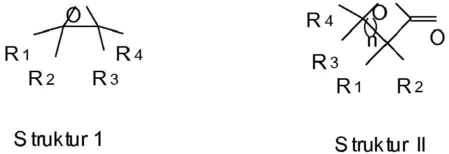

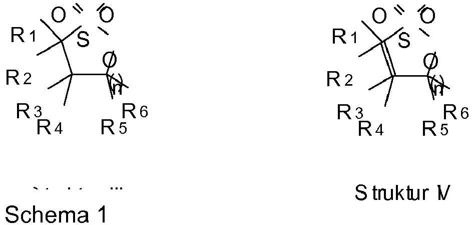

In den Strukturen I und II repräsentieren die Reste R1 bis R4 jeweils ein Wasserstoffatom, ein Halogen, eine Kohlenwasserstoff-Gruppe jeglicher Art, wie beispielsweise eine Alkyl-Gruppe mit einer Verzweigung oder Halogenierung, eine Arylgruppe, eine Alkoxygruppe, eine Acylgruppe oder Allyloxygruppe.

In einer bevorzugten Ausführungsform der vorliegenden Erfindung ist das mindestens eine Additiv elektrophil ist ausgewählt aus der Gruppe bestehend aus Sultonen, Sulfonaten, Lactonen, Oxiranen sowie Gemischen davon. Bevorzugt werden gesättigte Sultone der Struktur III und/oder ungesättigte Sultone der Struktur IV verwendet, insbesondere 1,3-Propansulton (n=1) oder 1,3-Propensulton (n=1). Hier sind die Reste R₁ bis R₆ bevorzugt jeweils ein Wasserstoffatom. Die Reste R₁ bis R₆ können unabhängig voneinander neben einem Wasserstoffatom auch eine nicht notwendigerweise fluorierte, lineare oder verzweigte Alkyl-, Alkenyl-, Alkinyl- oder Aryl-Seitengruppe sowie ein Halogenatom sein. Ist n=2 oder größer, können die zwei oder mehr Reste R₅ und die zwei oder mehr Reste R₆ unabhängig wie eben beschrieben substituiert sein.

Des Weiteren können als Substituenten funktionelle Reste aus folgenden Gruppen dienen: Alkoxy- oder Aryloxy- (C1-C20), jeweils un- oder (teil-) substituiert mit Halogenatomen, Allylaryl-, Heteroaryl- und/oder Etherenthaltenden Funktionalitäten.

Die Lithium-Ionen-Batterie der vorliegenden Erfindung umfasst insbesondere ein Mittel, welches mit dem mindestens einen Additiv chemisch reagieren kann.

Durch direkten Kontakt des Mittels mit dem überschüssigen Elektrolyten und den darin enthaltenen Additiven kommt es zu einer chemische Reaktion mit einem in das Mittel eingebrachten Stoff, der dort vorzugsweise so eingebracht sein kann, dass er dort immobilisiert ist und die Additive chemisch bindet und/oder in ungefährliche beziehungsweise weniger reaktive Komponenten umwandelt.

Die folgenden Ausführungen beschreiben insbesondere das erfindungsgemäße Zusammenspiel des Mittels mit Sulfonsäurederivaten, wie alkylierend wirkenden Sulfonaten und/oder Sultonen, einschließlich ihrer funktionalisierten Derivate. Das Wirkprinzip des Mittels gemäß der vorliegenden Erfindung ist aber nicht auf diesen Typ an Additiven beschränkt und dementsprechend auf ähnlich reaktive Additive, Agenzien oder Heterozyklen übertragbar, wie beispielsweise Oxetane oder andere reaktive Heterozyklen oder Kohlenstoff-Stickstoff oder Kohlenstoff-Sauerstoffverbindungen mit Strukturen, die einer Ringöffnungsreaktion zugänglich sind.

Im Falle der Sultone kann die Desaktivierung des mindestens einen Additivs beispielsweise durch einen ringöffnenden, nucleophilen Angriff des Mittels geschehen. Dieses beinhaltet insbesondere desaktivierende Reaktionen der Sultone mit im Mittel immobilisierten Stoffen, die eine funktionelle Gruppe wie Thio(lat), Thioether-, Alkohol(at)-, Carboxyl-, (tertiäre) Amin-, Phosphan-, Phosphit- oder Säureamid-Gruppe tragen oder nucleophile Heterozyklen wie insbesondere Pyridin, Pyrrol oder Phospholane enthalten.

Beispielhafte sind ausgewählte Reaktionen mit Sultonen sind im Schema 2 gezeigt.

In einer bevorzugten Ausführungsform umfasst das mindestens eine Mittel daher Verbindungen mit Funktionalitäten, die ausgewählt sind aus der Gruppe bestehend aus Thiolen, Thioethern, Alkoholen, Carboxylen, Aminen, Phosphanen, Phosphiten, Säureamiden und/oder aliphatischen, ungesättigten oder aromatischen Heterozyklen.

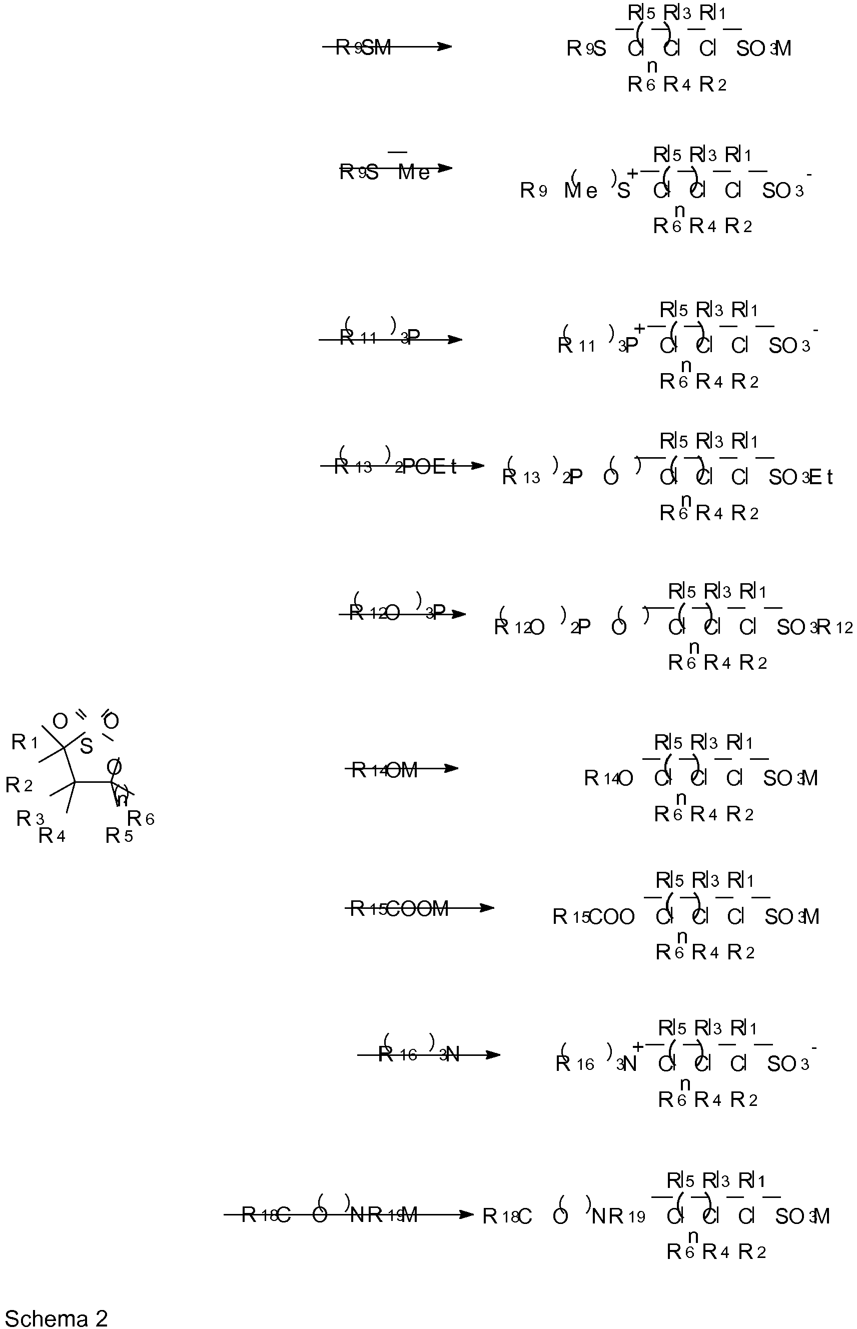

Die Reste R₉ bis R₁₅ können unabhängig voneinander neben einem Wasserstoffatom auch eine nicht notwendigerweise fluorierte, lineare oder verzweigte Alkyl-, Alkenyl-, Alkinyl-, Alkoxy-, Aryl-, Aryloxy- oder Heteroarylgruppe sowie Halogene sein. M ist ein Metallkation, das bevorzugt ausgewählt ist aus den Alkalimetallen und Erdalkalimetallen, besonders bevorzugt aus Lithium und Natrium, ganz besonders bevorzugt Natrium.

Die angeführten Funktionalitäten können dabei entweder in monomerer Form oder aber auch in polymerer Form respektive gebunden an ein Polymerrückgrat angewendet werden, wie es beispielsweise bei Polyazolen oder Polyvinylpyridinen der Fall ist. Jedoch ist die Erfindung nicht auf die zuvor genannten Gruppen und Reaktionen limitiert und schließt daher Gruppen mit vergleichbaren Eigenschaften ein.

Die nucleophilen Gruppen bringen außerdem den Vorteil, dass sie gleichzeitig als Flusssäure-Scavenger wirken können.

Des Weiteren kann das mindestens eine Mittel eine physikalisch-chemische, oberflächenadsorptive Bindungsreaktion mit dem elektrophilen Additiv eingehen, etwa wie eine Aktivkohle oder ein poröses, schwammartiges Polymer oder Copolymer, die beispielsweise mit einem nucleophilen oder stark elektronegativen Stoff aktiviert oder funktionalisiert sind. Unter anderem kann das Mittel auch beispielsweise ein mit einem Nukleophil oder stark elektronegativen Stoff funktionalisierter Adsorber sein, bevorzugt also ein Adsorber, der mit einer der oben ausgeführten erfindungsgemäßen Funktionalitäten funktionalisiert wurde. Dieses Mittel würde mit dem elektrophilen Additiv, insbesondere den Sultonen, Lactonen oder Oxiranen und anderen alkylierenden Agentien reagieren.

Sind dem Elektrolyten auch hochreaktive nucleophile Additive zugegeben kann zu dem mindestens einen Mittel ergänzend oder auch ausschließlich ein Mittel in der Zelle integriert werden, welches eine physikalische, oberflächenadsorptive Bindungsreaktion mit dem nukleophilen Additiv eingeht, etwa wie eine Aktivkohle oder ein poröses, schwammartiges Polymer oder Copolymer, die beispielsweise mit einem elektrophilen oder stark elektropositiven Stoff aktiviert oder funktionalisiert sind. Dieses Mittel würde mit dem nukleophilen Additiv reagieren.

Alternativ dazu kann das Mittel gemäß der vorliegenden Erfindung selbst auch ein poröses Polymer umfassen, an das Seitengruppen mit entsprechenden Rezeptoren für die Additive angebunden sind. Es kann aber auch ein poröses, schwammartiges Polymer sein, in dem die mit den Additiven reagierenden Stoffe oder funktionellen Gruppen chemisch gebunden oder physikalisch immobilisiert sind. In einer weiteren Ausgestaltung kann das erfindungsgemäße Mittel auch ganz aus einem Stoff bestehen, der aufgrund seiner elektrophilen oder nukleophilen Eigenschaften oder aufgrund anderer reaktiver Eigenschaften mit den Additiven reagiert.

Um mit den elektrophilen Additiven zu reagieren, kann das erfindungsgemäße Mittel auch eine in polymerer Matrix oder Folienstruktur eingebettete Lithiumverbindung aus dem Bereich der Legierungen des Lithiums mit Silizium, Zinn oder einem anderen Lithium-legierungsbildenden Metall, Halbmetall oder Halbleiter umfassen. In einer weiteren bevorzugten Ausführungsform der vorliegenden Erfindung umfasst das mindestens eine Mittel eine in polymerer Matrix oder Folienstruktur eingebettete Lithiumverbindung, die aus dem Bereich der Legierungen des Lithiums mit Silicium, Zinn oder einem anderen mit Lithium Legierungen bildende Metall, Halbmetall oder Halbleiter ausgewählt ist.

Wenn das erfindungsgemäße Mittel in Form einer Lithiumverbindung verwirklicht wird, kann es auch einfach metallisches Lithium umfassen, welches in eine Matrix oder in ein Polymer als Pellet, Schicht oder Folie eingebracht wird. In einer bevorzugten Ausführungsform der vorliegenden Erfindung liegt das Mittel in der Form von in einer Matrix oder Polymer als Pellet, Schicht oder Folie eingebrachtes metallisches Lithium vor.

Das Mittel der erfindungsgemäßen Lithium-Ionen-Batteriezelle kann auch ein mit Additiven reaktives Material eingeschlossen in einer Hülle sein, die durch eine Lösungsreaktion mit dem Elektrolyten zersetzt wird und das reaktive Material thermochemisch oder thermophysikalisch freisetzt. Alternativ ist eine poröse Stuktur möglich, die das das Mittel wie beispielsweise in einem Filter immobilisiert. In beiden Fällen kann die Reaktion mit den restlichen, überstehenden Additiven nach einer definierbaren Zeit erfolgen, wie beispielsweise nach dem Abschluss der Zellaktivierung. Bevorzugt ist dabei, dass die Additive selbst in der porösen Struktur immobilisiert werden und diese dann durch eine zeitlich einstellbare Zersetzung der Host-Struktur ausgelöst durch den Elektrolyten thermochemisch oder thermophysikalisch freigesetzt werden. Dadurch ist es möglich, die Konzentration der toxischen Additive im Basiselektrolyten gering zu halten und dennoch beispielsweise durch Zyklierung entstandene potentielle Schäden an der SEI, wie beispielsweise feine Risse, die die Zyklenbeständigkeit negativ beeinflussen, mit Hilfe der Additive optimal entgegenzuwirken. In einer Ausführungsform der vorliegenden Erfindung ist daher das mindestens eine Mittel in einer Hülle eingebettet, die durch eine Reaktion, insbesondere eine Lösungsmittelreaktion, mit dem Elektrolyten zersetzt wird und das mindestens eine Mittel thermochemisch oder thermophysikalisch freisetzt. In einer weiteren Ausführungsform der vorliegenden Erfindung kann das Mittel auch in einen Bestandteil der Ummantelung oder Einhüllung der Wickel der Lithium-Ionen-Akkumulatoren wie etwa in einer organischen Polymerfolie eingebracht sein und so langsam freigesetzt werden, so dass es durch Poren mit dem Elektrolyten reagieren kann. Dabei ist es insbesondere bevorzugt, dass das mindestens eine Mittel als Beschichtung auf dem Zellseparator aufgebracht ist und/oder als Polymer oder in einem Polymer copolymerisiert vorliegt, das selbst als Separator wirken kann oder als funktionelle Schicht auf eine Zellkomponente, insbesondere den Separator, aufgebracht ist.

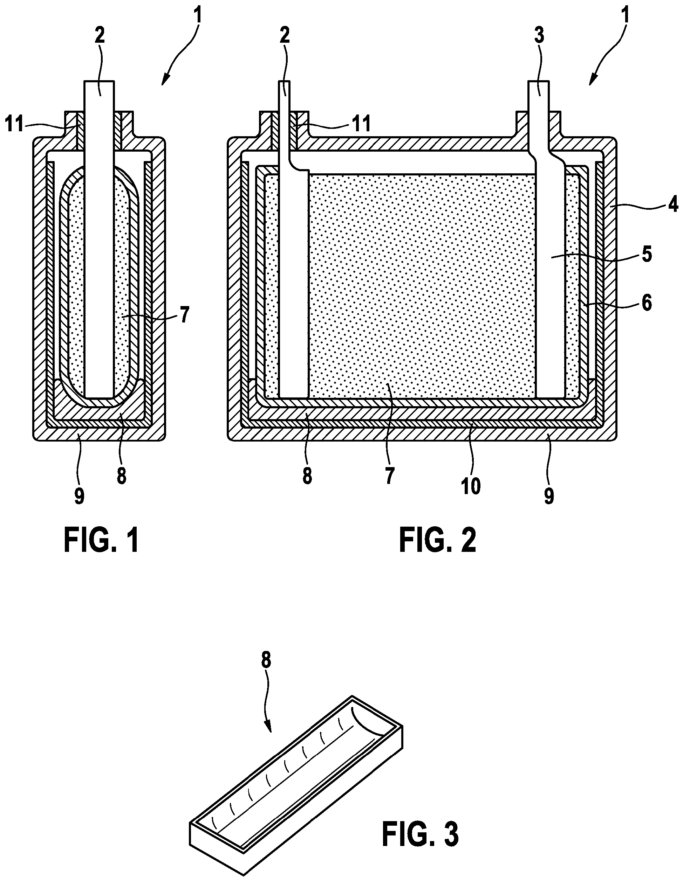

Unabhängig von der Art der Ausgestaltung des Mittels in der erfindungsgemäßen Lithium-Ionen-Batteriezelle ist es im Rahmen der vorliegenden Erfindung besonders bevorzugt, dass insbesondere bei durch Gravitation und Beschleunigung im Fahr-, Flug- oder Schiffsbetrieb beaufschlagten Zellen das erfindungsgemäße Mittel im unteren Bereich der Zelle oder im Bereich der unteren Wandungen der Zelle befindet oder dort angebracht ist. Es ist daher ebenfalls besonders bevorzugt, dass dass erfindungsgemäße mindestens eine Mittel in Form von Flocken, Flakes, Pellets oder Tabletten vorliegt. Dabei kann es insbesondere leicht beweglich oder teilmobil im Inneren der Zelle an einer Stelle ohne Wickel befinden. Alternativ kann das Mittel auch als ganzheitlicher Körper ausgeprägt sein, der im unteren Bereich der Zelle den Wickel locker umschließt. In diesem Fall ist es bevorzugt, dass das mindestens eine Mittel im unteren Bodenbereich der erfindungsgemäßen Zelle zwischen Wickel und Zellwandung mit zwei Klemmblechen eingeklemmt ist, die vor dem Befüllen der Zellen an der Zellwandung angeschweißt werden. Ebenso kann das mindestens eine Mittel in Form von Folien, Flocken, Flakes oder Pellets auch in einem kleinen Beutel auf dem Boden der erfindungsgemäßen Zelle angebracht sein. Dabei ist es bevorzugt, dass der Beutel mittels Klemmblechen oder auch mit dem Wickelkörper ((7) in Fig. 1 und Fig. 2) befestigt ist, so dass er nicht zerreissen kann.

Alternativ dazu kann das mindestens eine Mittel der erfindungsgemäßen Lithium-Ionen-Batteriezelle in/auf den Zellseparator in Form einer Beschichtung oder in Form eines eines Polymer oder Copolymer selbst als Separator dienen oder als Film auf eine Zellkomponente beschichtet sein.

In einer weiteren bevorzugten Ausführungsform enthält das mindestens eine Mittel zusätzlich mindestens einen Scavenger für beispielsweise aber nicht ausschließlich Wasser- und/oder Flusssäure. Diese Fänger oder auch Scavenger können dabei den Elektrolyten, der sich durch Verdampfung und Kondensation ständig umwälzt, beispielsweise kontinuierlich von Wasserspuren und Flusssäure reinigen. Insbesondere Flusssäure kann durch kalendarische Alterungsprozesse während dem Betrieb der Zelle entstehen. Wasserfänger können Trocknungsmittel auf Silica- oder Alumosilikat-Basis wie beispielsweise Zeolithe sein, aber auch funktionelle (Seiten-)-Gruppen wie NO₂, NH₂, SiOH, (RCO)₂O die an Polymere oder Oligomere gebunden sind. Als Flusssäure-Scavenger können Organopolysiloxane (Struktur V) oder Organopolyphosphazene (Struktur VI) wirken, wie es beispielsweise in US 4,859,747 und US 2012/002813 beschrieben ist. In beiden Fällen sind auch zyklische Derivate möglich. Die Reste R7 und R8 können unter anderem lineare oder verzweigte Alkyl-, Alkenyl-, Alkinyl-, oder Aryl-Seitengruppe, sowie ein Halogenatom sein. Desweiteren sind funktionelle Reste aus folgenden Gruppen bevorzugt: Alkoxy- oder Aryloxy- (C1-C20), jeweils un- oder substituiert mit Halogenatomen, Allylaryl-, Heteroaryl- und/oder (zyklische) ether-enthaltende Funktionalitäten.

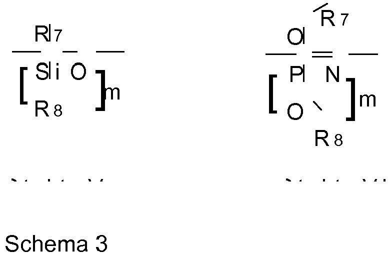

Auch Stickstoffbasen wie Pyridin oder DBU (Diazabicycloundecen) können bevorzugt als Flusssäure-Fänger wirken. Eine kontinuierlich niedrige Konzentration von Wasser und Flusssäure ist ein wichtiger Faktor bezüglich einer hohen Lebensdauer der Zelle.

Auch eine multifunktionelle Ausführung des Mittels durch die gleichzeitige Einführung weiterer funktioneller Gruppen, die als Scavenger für Radikale, Anionen und/oder Mangan wirken können, ist im Rahmen der vorliegenden Erfindung bevorzugt, insbesondere wenn es sich um ein polymer-basiertes Mittel handelt. Als Radikalfänger können Grundstrukturen wie 2,6-Di-tertbutylkresol oder allylische Kohlenstoff-Kohlenstoff-Doppelbindungen fungieren. Endständige Kohlenstoff-Kohlenstoffdoppelbindungen reagieren unter anderem mit Alkoxid-Anionen, die während der Zyklierung im Elektrolyten entstehen können. Funktionelle Oxalatgruppen oder modifizierte Zeolithe können erfindungsgemäß als Manganfänger eingesetzt werden.

Das Mittel kann in seiner hier beschriebenen Struktur entweder ergänzend zu seiner Fähigkeit mit den Additiven zu reagieren mit einem oder mehreren der erwähnten Scavengern für Wasser, Flusssäure und/oder Anionen oder Sonstigem ausgerüstet sein, oder aber auch ausschließlich mit ausgewählten Scavengern. In einer bevorzugten Ausführungsform weist das Mittel daher zusätzlich mindestens eine Scavenger-Funktion auf, ausgewählt aus der Gruppe bestehend aus Wasser-, Mangan- und Flusssäure-Scavengern.

Insbesondere kann das Mittel und/oder der im Mittel ergänzend integrierte Scavenger, neben der Eigenschaft mit elektrophilen Additiven zu reagieren, welche auf einer seiner chemischen Grundstrukturen fundiert, auch in Form einer bifunktionelle Komponente zusätzlich mit elektrophilen oder stark elektropositiven Seitengruppen ausgestattet sein, die auch mit den nukleophilen Additiven reagieren können.

Auf der anderen Seite kann das Mittel und/oder der im Mittel ergänzend integrierte Scavenger, nebender Eigenschaft mit nukleophilen Additiven zu reagieren, welche auf einer seiner chemischen Grundstrukturen fundiert, auch in Form einer bifunktionellen Komponente zusätzlich mit nukleophilen oder stark elektronegativen Seitengruppen ausgestattet sein, die auch mit den elektrophilen Additiven reagieren können.

Auch kann das Mittel mit einem Scavenger und einer zum lonenaustausch fähigen Verbindung ausgerüstet sein, welches Protonen im Elektrolyten, welche beispielsweise durch Restwasser hervorgerufen werden können, gegen Li-Ionen oder in einer anderen Batterie gegen Alkali- oder Erdalkalimetallionen austauscht.

Insbesondere kann das Mittel auch elektrisch leitend oder halbleitend in seiner Matrix sein und so entweder mit der Anode im Sinne der Reaktion mit den elektrophilen Additiven oder mit der Kathode im Sinne der Reaktion mit den nukleophilen Additiven verbunden sein.

Ein elektrisch leitendes Mittel kann auch eine auf Kupferfolie aufgebrachte Lithium-Ionen Interkalationsverbindung wie Graphit, oder eine andere auf Kohlenstoff basierende elektrisch leitende Lithium-Interkalationsverbindung oder Legierung sein, die beispielsweise mit der Kathode elektrisch leitfähig verbunden ist und als elektrochemisch aktivierter Reaktand bezüglich der elektrophilen Additivreaktionen auf der Elektrode wirkt. Das elektrisch leitende Mittel kann auch auf einer Aluminiumfolie aufgebracht sein, die mit der Anode elektrisch leitfähig verbunden ist und als elektrochemisch aktivierter Reaktand bezüglich der nukleophilen Additivreaktion auf der Elektrode wirkt.

### Beschreibung der Figuren

Figur 1 zeigt einen Querschnitt duch eine erfindungsgemäße Lithium-Ionen-Batteriezelle (1). In dieser Ansicht der Lithium-Ionen-Batteriezelle (1) ist die Zellwandung bzw. der Becher (9), in der sich unter anderem ein von einer Isolierung (11) umgebener Pol (2) befindet, veranschaulicht. Im Inneren der Lithium-Ionen-Batteriezelle (1) befindet sich des Weiteren um den Pol (2) der Wickel (7). Der Wickel (7) enthält den mindestens einen Elektrolyten mit dem mindestens einen Additiv. Im unteren Bereich bzw. unterhalb des Pols (2) und des Wickels (7) der Zelle (1) ist das Mittel (8) beispielhaft als bodenbeckender Körper dargestellt.

Figur 2 zeigt einen seitlichen Querschnitt durch die in Figur 1 abgebildete erfindungsgemäße Lithium-Ionen-Batteriezelle (1). Die Zelle (1) umfasst einen Pol (2) sowie einen zweiten Pol (3), die mit einer Isolierung (11) umgeben sind, ein Gehäuse (4), einen Wickel (7) mit einer Wickelummantelung (6) und einem Verbindungselement (5) zwischen Wickel (7) und Pol bzw. Polklemme (2). Des Weiteren umfasst die Zelle (1) eine Zellwandung bzw. einen Becher (9) mit einer Folie (10). Im unteren Bereich der Zelle (1) ist das Mittel (8) in einer Ausführungsform als bodenbedeckender Körper dargestellt.

Figur 3 verdeutlicht das in den Figuren 1 und 2 als den Boden der Lithium-Ionen-Batteriezelle (1) bedeckend dargestellte Mittel (8). Das Mittel (8) ist hier in einer bevorzugten Ausführungsform als bodenbedeckender Körper dargestellt. Dieses ist insbesondere für den Fall vorteilhaft, wenn bei einer üblicherweise aufrecht gelagerten bzw. betriebenen Batteriezelle (1) durch einen Schaden am Wickel (7) Elektrolyt und/oder Additiv austritt und Richtung Boden des Bechers (9) und der darauf befindlichen Folie (10) sickert. Bevor der Elektrolyt mitsamt dem oder den Additiv(en) die Folie (10) oder den Boden des Bechers (9) erreicht oder sogar ganz aus der Zelle (1) austritt, erreicht er das als Bodenkörper ausgeführte Mittel (8). Hier kann dann das Mittel (8) vorteilhafterweise mit dem Additiv chemisch reagieren und/oder das Additiv physikalisch absorbieren. Dadurch wird eine mögliche Schädigung der Zelle (1), zumindest aber ein Austritt von potentiell für den Menschen schädlichen Additiven aus der Zelle (1) verhindert.

## Patentansprüche

1. Lithium-Ionen-Batteriezelle (1), umfassend
- mindestens einen Wickel (7) enthaltend mindestens einen Elektrolyten, umfassend mindestens ein elektrophiles Additiv und/oder mindestens ein nucleophiles Additiv,
- ein Mittel (8), welches mit dem mindestens einen Additiv chemisch reagieren kann, wobei
das mindestens eine Mittel (8) in einer Hülle eingebettet ist, die durch eine Reaktion, insbesondere eine Lösungsreaktion, mit dem Elektrolyten zersetzt werden kann und das mindestens eine Mittel thermochemisch oder thermophysikalisch freisetzen kann.

2. Lithium-Ionen-Batteriezelle (1) gemäß Anspruch 1, wobei das mindestens eine Additiv elektrophil oder nucleophil ist.

3. Lithium-Ionen-Batterizelle (1) gemäß Anspruch 1 oder Anspruch 2, wobei das mindestens eine Additiv elektrophil ist und ausgewählt ist aus der Gruppe bestehend aus Sultonen, Sulfonaten, Lactonen, Oxiranen sowie Gemischen davon.

4. Lithium-Ionen-Batterizelle (1) gemäß mindestens einem der vorstehenden Ansprüche, wobei das mindestens eine Mittel (8) zusätzlich das mindestens eine Additiv physikalisch adsorbieren kann.

5. Lithium-Ionen-Batteriezelle (1) gemäß mindestens einem der vorstehenden Ansprüche, wobei das mindestens eine Mittel (8) eine in polymerer Matrix oder Folienstruktur eingebettete Lithiumverbindung umfasst, die aus dem Bereich der Legierungen des Lithiums mit Silicium, Zinn oder einem anderen mit Lithium Legierungen bildende Metall, Halbmetall oder Halbleiter ausgewählt ist.

6. Lithium-lonen-Batteriezelle (1) gemäß mindestens einem der vorstehenden Ansprüche, wobei das mindestens eine Mittel (8) Verbindungen mit Funktionalitäten umfasst, die ausgewählt sind aus der Gruppe bestehend aus Thiolen, Thioethern, Alkoholen, Carboxylen, Aminen, Phosphanen, Phosphiten, Säureamiden und/oder aliphatischen, ungesättigten oder aromatischen Heterozyklen.

7. Lithium-Ionen-Batteriezelle (1) gemäß mindestens einem der vorstehenden Ansprüche, wobei das mindestens eine Mittel (8) in Form von Flocken, Flakes, Pellets oder Tabletten vorliegt.

8. Lithium-Ionen-Batteriezelle (1) gemäß Anspruch 5, wobei das Mittel (8) in Form von in einer Matrix oder Polymer als Pellet, Schicht oder Folie eingebrachtes metallisches Lithium vorliegt.

9. Lithium-Ionen-Batteriezelle (1) gemäß mindestens einem der vorstehenden Ansprüche, wobei das mindestens eine Mittel (8) in eine poröse Struktur eingebettet ist, die ausgewählt ist aus Aktivkohle, einem porösen Polymer oder einer Folie.

10. Lithium-Ionen-Batteriezelle (1) gemäß mindestens einem der vorstehenden Ansprüche, wobei das Mittel (8) als Beschichtung auf dem Zellseparator aufgebracht ist und/oder als Polymer oder in einem Polymer co-polymerisiert vorliegt, das selbst als Separator wirken kann oder als funktionelle Schicht auf eine Zellkomponente, insbesondere den Separator, aufgebracht ist.

11. Lithium-Ionen-Batteriezelle (1) gemäß mindestens einem der vorstehenden Ansprüche, wobei das mindestens eine Mittel (8) zusätzlich mindestens eine Scavenger-Funktion aufweist, ausgewählt aus der Gruppe bestehend aus Wasser-, Mangan- und Flusssäure-Scavengern.

## Claims

1. Lithium-ion battery cell (1), comprising
- at least one winding (7) containing at least one electrolyte, comprising at least one electrophilic additive and/or at least one nucleophilic additive,
- a medium (8) which can react chemically with the at least one additive, wherein,
the at least one medium (8) is embedded in a shell which can be decomposed by a reaction, in particular a dissolution reaction, with the electrolyte and can liberate the at least one medium thermochemically or thermophysically.

2. Lithium-ion battery cell (1) according to Claim 1, wherein the at least one additive is electrophilic or nucleophilic.

3. Lithium-ion battery cell (1) according to Claim 1 or Claim 2, wherein the at least one additive is electrophilic and is selected from the group consisting of sultones, sulfonates, lactones, oxiranes and mixtures thereof.

4. Lithium-ion battery cell (1) according to at least one of the preceding claims, wherein the at least one medium (8) can additionally physically adsorb the at least one additive.

5. Lithium-ion battery cell (1) according to at least one of the preceding claims, wherein the at least one medium (8) comprises a lithium compound which is embedded in a polymer matrix or film structure and which is selected from the field of alloys of lithium with silicon, tin or some other metal, semimetal or semiconductor that forms alloys with lithium.

6. Lithium-ion battery cell (1) according to at least one of the preceding claims, wherein the at least one medium (8) comprises compounds having functionalities which are selected from the group consisting of thiols, thioethers, alcohols, carboxyles, amines, phosphanes, phosphites, acid amides and/or aliphatic, unsaturated or aromatic heterocyclic compounds.

7. Lithium-ion battery cell (1) according to at least one of the preceding claims, wherein the at least one medium (8) is present in the form of flocks, flakes, pellets or tablets.

8. Lithium-ion battery cell (1) according to Claim 5, wherein the medium (8) is present in the form of metallic lithium introduced in a matrix or polymer as a pellet, layer or film.

9. Lithium-ion battery cell (1) according to at least one of the preceding claims, wherein the at least one medium (8) is embedded into a porous structure selected from activated carbon, a porous polymer or a film.

10. Lithium-ion battery cell (1) according to at least one of the preceding claims, wherein the medium (8) is applied as a coating on the cell separator and/or is present as a polymer or in a copolymerized manner in a polymer which itself can act as separator or is applied as a functional layer on a cell component, in particular the separator.

11. Lithium-ion battery cell (1) according to at least one of the preceding claims, wherein the at least one medium (8) additionally has at least one scavenger function, selected from the group consisting of water, manganese and hydrofluoric acid scavengers.

## Revendications

1. Élément de batterie au lithium-ion (1) comprenant
- au moins une enveloppe (7) contenant au moins un électrolyte comprenant au moins un additif électrophile et/ou au moins un additif nucléophile,
- un agent (8) qui peut réagir chimiquement avec ledit au moins un additif, dans lequel ledit au moins un agent (8) est noyé dans une enveloppe qui peut être décomposée par une réaction, en particulier une réaction en solution, avec l'électrolyte et qui peut libérer au moins un agent thermochimique ou thermophysique.

2. Élément de batterie au lithium-ion (1) selon la revendication 1, dans lequel ledit au moins un additif est électrophile ou nucléophile.

3. Élément de batterie au lithium-ion (1) selon la revendication 1 ou la revendication 2, dans lequel ledit au moins un additif est électrophile et est choisi dans le groupe constitué de sultanes, de sulfonates, de lactones, d'oxiranes et leurs mélanges.

4. Élément de batterie au lithium-ion (1) selon au moins l'une des revendications précédentes, dans lequel ledit au moins un agent (8) peut en outre adsorber physiquement ledit au moins un additif.

5. Élément de batterie au lithium-ion (1) selon au moins l'une des revendications précédentes, dans lequel ledit au moins un agent (8) comprend un composé de lithium, noyé dans une matrice polymère ou une structure de feuille, qui est choisi dans la gamme des alliages du lithium avec du silicium, de l'étain ou un autre métal, semi-métal ou semi-conducteur formant un alliage avec le lithium.

6. Élément de batterie au lithium-ion (1) selon au moins l'une des revendications précédentes, dans lequel ledit au moins un agent (8) comprend des composés ayant des fonctionnalités choisies dans le groupe constitué de thiols, de thioéthers, d'alcools, de carboxylènes, d'amines, de phosphanes, de phosphites, d'amides acides et/ou d'hétérocycles aliphatiques, insaturés ou aromatiques.

7. Élément de batterie au lithium-ion (1) selon au moins l'une des revendications précédentes, dans lequel ledit au moins un agent (8) se présente sous la forme de flocons, de lamelles, de pastilles ou de comprimés.

8. Élément de batterie au lithium-ion (1) selon la revendication 5, dans lequel l'agent (8) se présente sous forme de lithium métallique incorporé dans une matrice ou un polymère sous forme de pastille, de couche ou de film.

9. Élément de batterie au lithium-ion (1) selon au moins l'une des revendications précédentes, dans lequel ledit au moins un agent (8) est noyé dans une structure poreuse choisie parmi le charbon actif, un polymère poreux ou un film.

10. Élément de batterie au lithium-ion (1) selon au moins l'une des revendications précédentes, dans lequel l'agent (8) est appliqué sous forme de revêtement sur le séparateur d'éléments et/ou est présent sous forme de polymère ou est copolymérisé en un polymère, qui peut lui-même jouer le rôle de séparateur ou qui est appliqué sous forme de couche fonctionnelle sur un composant d'élément, en particulier le séparateur.

11. Élément de batterie au lithium-ion (1) selon au moins l'une des revendications précédentes, dans lequel ledit au moins un agent (8) présente en outre au moins une fonction d'agent de piégeage choisie dans le groupe constitué par des agents de piégeage à base d'eau, de manganèse et d'acide fluorhydrique.
